# EUROPEAN PATENT APPLICATION

(11) **EP 3 156 905 A1**
(43) Date of publication of application: **19.04.2017**
(21) Application number: 15306638.6
(22) Date of filing: 15.10.2015
(51) Int. Cl.: G06F 11/14

(54) **SYSTEM FOR MANAGING BACKUP STRATEGIES**

(71) Applicant: Softthinks, 59650 Villeneuve D'Ascq (FR)
(72) Inventor: GRIMONPREZ, Eric, 59130 LAMBERSART (FR)
(74) Representative: Balesta, Pierre

(57) **Abstract**

The invention relates to a device (10) for managing backup strategies.

The invention is characterized by the fact that the device comprises:
- a database (14) comprising at least a first backup strategy from a first source medium (20) to a first target medium (30), said first backup strategy comprising:
o a source identification of a first source volume within said first source medium (20);
o a target identification of a first target volume within said first target medium (30);

- a first backup software application (22) and a second backup software application (32) designed respectively to read data of the first source volume and to write data in the first target volume;
- a main software application (12) designed to cooperate with said first and second backup software applications (22, 32) so as to trigger the writing of at least part of the content of the first source volume in the first target volume according to said first backup strategy.

## Description

### Background of the invention

The present invention relates to the field of the management of digital environments and of their security, and more specifically to the backup and the recovery of the data stored in the media composing such digital environments.

A digital environment may comprise many systems and storage locations, e.g. workstations, laptops, tablets, smartphones, external storage units, online storage devices... so that it can be very complex to ensure that the data stored in the different systems and storage locations are properly saved in several places in order to ensure their security. Moreover, in case one of the systems or storage locations is destroyed or disappears, it can be difficult to save the relevant data in the new system or storage location designed to replace the former one by applying the recovery strategies in which the former system or storage location was involved. As a result, there are risks to lose data saved in the digital environment by applying not up-to-date or irrelevant backup and/or recovery strategies.

### Object and summary of the invention

Among other things, the present invention seeks to resolve the various above-mentioned technical problems. In particular, the present invention seeks to propose a device for managing backup strategies and designed to be accessed independently from the systems composing the digital environment.

This object is achieved by the fact that the invention provides a device for managing backup strategies, the device comprising:
- a database comprising a list of media, and at least a first backup strategy from a first source medium among said list to a first target medium among said list, said first backup strategy comprising:
   o a source identification of a first source volume within said first source medium;
   o a target identification of a first target volume within said first target medium;
- a communication module to access said database;
- a control module to interpret said first backup strategy;
- a first backup software application and a second backup software application designed respectively to read data of the first source volume and to write data in the first target volume;
- a main software application designed to cooperate with said first and second backup software applications so as to trigger the writing of at least part of the content of the first source volume in the first target volume according to said first backup strategy.

The term "backup" designates the operation consisting in saving the content of a first volume, known as a source volume, in a second volume, known as a target volume.

The backup operation might consist in writing the exact content of the first source volume in the first target volume. Alternatively, and without going beyond the ambit of the present invention, the backup operation might consist in writing in the first target volume the differences between the current content of the first source volume and a previous version of this content, this previous version being either saved in the first target volume, or in another medium.

The term "medium" designates an object that is able to store electronic files; for instance, the medium can be a cloud i.e. an online location providing identified locations able to store electronic files, or a physical object such as an internal disk of a workstation or of a laptop, an external hard disk drive, a USB key... The medium contains one or several volumes in which electronic files can be stored, each volume being given a unique identification.

Preferably, the database is stored online.

As a result, the first backup strategy is saved independently from the first source and target media; in other words, even in case one of the first source and target media is destroyed or disappears, the first backup strategy will not be lost.

The security of the digital environment comprising the first source and target media is improved, and particularly the management of the data stored in the first source and target volumes.

The invention is specified below in a series of embodiment variants that may be considered singly or in combination with one or more of the preceding embodiment variants.

Preferably, the device comprises a user interface designed to display and/or provide an interface for defining said first backup strategy.

Advantageously, the user interface is generated by a web portal.

Thus, the user can easily access the list of the backup strategies defined in the database of the device; new strategies can also easily be added, for instance in case one of the volumes of one of the first source and target media would not be included in one of the existing backup strategies.

In order to avoid any collisions between the data saved in the first source and target volumes, the device, and especially its database, is designed so that:
- a source identification can be used by several backup strategies, meaning that the content of said first source volume can be saved in several target volumes; whereas
- a target identification can be used in only one backup strategy, so that the saved data that are contained in said first target volume might not be crushed by the running of a second backup strategy.

Preferably, the first backup strategy further comprises a first status which represents whether the content of the first target volume is identical to the content of the first source volume or not, the first and second backup software applications being designed to compare the content of the first source and target volumes and to allocate the relevant value to the first status.

Advantageously, the user interface is designed to display said first status.

As a result, a user can easily check whether it is necessary to run said first backup strategy. Thus, the security and the efficiency of the management of the digital environment are further improved.

Preferably, the control module is designed to interpret said first status, said main software application being designed to trigger the writing of at least part of the content of the first source volume in the first target volume when their contents are not identical.

It is thus ensured that the data contained in the first source volume of the first source medium are automatically saved when they are modified.

Advantageously, the user interface is designed to display said first status.

Thanks to the display of said first status by the user interface, it is also possible for the user to check that the first backup strategy has been properly run, for instance in case it is supposed to be automatically triggered by the main software application when the contents of the first source and target volumes are not identical.

Preferably, said first backup strategy further comprises a first cryptographic key, the main software application triggering the encryption of at least part of the content of the first source volume written on the first target volume using said first cryptographic key.

The security of the digital environment is further improved, the backup data saved on the first target volume being unreadable without said cryptographic key. The encryption is in particular useful when the first target volume is saved on a cloud storage.

Advantageously, the database further comprises at least a first recovery strategy from the first target medium to a first recovery medium among said list,
- said first recovery strategy comprising:
   o a recovery identification of a first recovery volume within said first recovery medium;
   o said target identification of said first target volume within said first target medium;
- the device further comprising a first and a second recovery software applications designed respectively to read data of the first target volume and to write data in the first recovery volume;
- the main software application being designed to cooperate with said first and second recovery software applications so as to trigger the writing of at least part of the content of the first target volume in the first recovery volume according to said first recovery strategy.

The term "recovery" designates the operation consisting in saving the content of a first volume, known as a target volume, in a second volume, known as a recovery volume.

The recovery operation might consist in writing the exact content of the first target volume in the first recovery volume. Alternatively, and without going beyond the ambit of the present invention, the recovery operation might consist in writing in the first recovery volume the differences between the current content of the first recovery volume and a previous version of this content, this previous version being either saved in the first recovery volume, or in another medium.

As a result, the first recovery strategy is saved independently from the first recovery and target media; in other words, even in case one of the first recovery and target media is destroyed or disappears, the first recovery strategy will not be lost.

In order to avoid any collisions between the data saved in the first recovery and target volumes, the device is designed so that:
- a recovery identification can be used in only one recovery strategy, so that the saved data that are contained in said first recovery volume might not be crushed by the running of a second recovery strategy; whereas
- a target identification can be used in several recovery strategies, meaning that the content of said first target volume can be saved in several recovery volumes.

The security of the digital environment comprising the first recovery and target media is improved, and particularly the management of the data stored in the first recovery and target volumes.

The present invention also concerns a database for saving backup strategies, said database comprising:
- a list of media; and
- at least a first backup strategy from a first source medium among said list to a first target medium among said list, said first backup strategy comprising:
   o a source identification of a first source volume within said first source medium;
   o a target identification of a first target volume within said first target medium.

The invention further concerns a system for managing backup strategies, the system comprising:
- a device according to the present invention;
- a first client device having an operating system, the first backup software application being installed on said first client device;
- a first source medium having a first source volume;
- a second client device having an operating system, the second backup software application being installed on said second client device; and
- a first target medium having a first target volume.

The first and second client devices can either be two different devices, or a single device.

In case the first and second client devices are a single device, the first source and target media can either be two different media, or a single medium.

The invention further concerns a system for managing recovery strategies, the system comprising:
- a device according to the present invention;
- a first client device having an operating system, the second recovery software application being installed on said first client device;
- a first recovery medium having a first recovery volume;
- a second client device having an operating system, the first recovery software application being installed on said second client device; and
- a first target medium having a first target volume.

The first and second client devices can either be two different devices, or a single device.

In case the first and second client devices are a single device, the first recovery and target media can either be two different media, or a single medium.

The invention also concerns a method for managing at least one backup strategy between a first source medium and a first target medium, said method comprising the steps of:
- connecting said first source and first target media to a server having a database comprising at least a first backup strategy from said first source medium to said first target medium, said first backup strategy comprising:
   o a source identification of a first source volume within said first source medium;
   o a target identification of a first target volume within said first target medium;
- writing at least part of the content of said first source volume in said first target volume.

Preferably, the method further comprises, prior to the writing of at least part of the content of said first source volume in said first target volume, the steps of:
- connecting said first source and target media to a first and a second client devices, said first and second client devices having each an operating system;
- connecting said first and second client devices to said server; and
- connecting said first client device to said second client device.

The invention also concerns a method for managing at least one recovery strategy between a first target medium and a first recovery medium, said method comprising the steps of:
- connecting said first target and first recovery media to a server having a database comprising at least a first recovery strategy from said first target medium to said first recovery medium, said first recovery strategy comprising:
   o a recovery identification of a first recovery volume within said first recovery medium;
   o a target identification of said first target volume within said first target medium;
- writing at least part of the content of the first target volume in the first recovery volume.

Preferably, the method further comprises, prior to the writing of at least part of the content of said first target volume in said first recovery volume, the steps of:
- connecting said first target and recovery media to a second and a first client devices respectively, said first and second client devices having each an operating system;
- connecting said first and second client devices to said server; and
- connecting said first client device to said second client device.

### Brief description of the drawings

The invention and its advantages can be better understood on reading the following detailed description of different embodiments, given as non-limiting examples and shown in the accompanying drawings, in which:
- Figure **1** is a first system according to the present invention, having three distinct client devices;
- Figure **2** is a second system according to the present invention, having two distinct client devices;
- Figure **3** is a third system according to the present invention, having a single client device;
- Figure **4** is a diagram illustrating a method for managing a backup strategy according to the present invention; and
- Figure **5** is a diagram illustrating a method for managing a recovery strategy according to the present invention.

### Detailed description of the invention

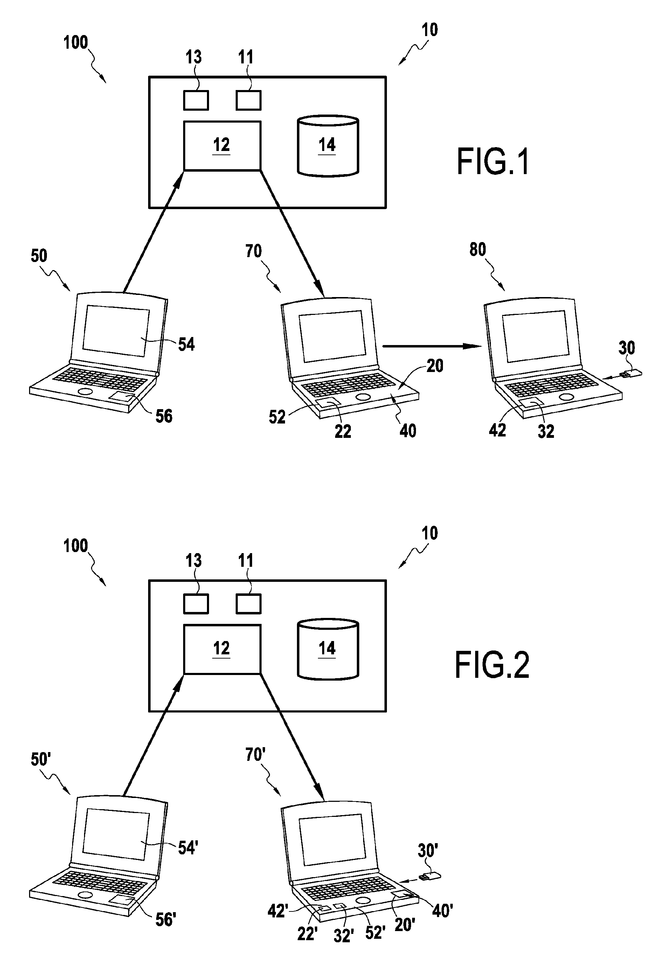

In the example shown in Figure **1****,** the system **100** for managing backup and recovery strategies according to the present invention comprises a device **10** having a database **14,** a communication module **11** to access said database, a control module **13** and a main software application **12.**

By way of example and in non-limiting manner, the database **14** and the main software application **12** are saved on a first server. Without going beyond the ambit of the present invention, a system **100** could be conceived in which the database **14** and the main software application **12** would be saved on two distinct servers, so as to better improve the security and the efficiency of the present invention.

The system **100** further comprises an administrator device **50,** a first client device **70** and a second client device **80,** the administrator and client devices **50, 70, 80** having each an operating system.

By way of example and in non-limiting manner, the administrator and client devices **50, 70, 80** are laptops; without going beyond the ambit of the present invention, they could be workstations, tablets, smartphones... or any other electronic device having an operating system.

An administrator software application **56** is installed on the administrator device **50,** the administrator software application **56** having a user interface **54.**

The first client device **70** has a first hard disk constituting a first source medium **20;** the second client device **80** has a USB key constituting a first target medium **30.**

Without going beyond the ambit of the present invention, the first source and target media **20, 30** could be any other kind of physical object able to store data, such as an external hard drive disk, an SD card... The first source and target media **20, 30** could also be a cloud storage location accessed via an online account reachable respectively by the first and second client devices **70, 80.**

The first source and target media **20, 30** have respectively a first source and target volumes that are identified respectively by a source and a target identification.

The device **10** of the system **100** of the present invention also has a first backup software application **22** and a second backup software application **32** that are installed respectively on the first and second client devices **70, 80,** the first and second backup software applications **22, 32** being designed respectively to read data on the first source volume of the first source medium **20** and to write data in the first target volume of the first target medium **30.**

The database **14** of the present invention comprises a list of media having, in particular, the first source and target media **20, 30;** the database **14** further comprises a first backup strategy from the first source medium **20** to the first target medium **30,** said first backup strategy comprising the source identification of the first source volume of the first source medium **20,** and the target identification of the first target volume of the first target medium **30.**

As shown in figure **1****,** the first and second client devices **70, 80** are connected to each other. By way of example and in non-limiting manner, the first and second client devices **70, 80** are both connected to a same server, said server being, by way of example and in non-limiting manner, distinct from the first server on which the database **14** and the main software application **12** are saved. In other words, due to the interconnection between the first and second client devices **70, 80,** the content of the first source volume that is to be written in the first target volume when the first backup strategy is triggered does not necessarily transit through the first server; the efficiency of the running of the first backup strategy is thus not constrained by the capacities of the first server.

The communication module **11** of the present invention is designed to access the database **14,** the control module **13** being designed to interpret the strategies saved in the database **14,** and in particular the first backup strategy.

The main software application **12** of the present invention is designed to cooperate with the first and second backup software applications **22, 32** so as to trigger the writing of at least part of the content of the first source volume of the first source medium **20** in the first target volume of the first target medium **30** according to the first backup strategy saved in the database **14.**

By way of example and in non-limiting manner, the first backup strategy saved in the database **14** further comprises a first cryptographic key, the main software application **12** being designed to trigger the encryption of at least part of the content of the first source volume of the first source medium **20** on the first target volume of the first target medium **30** using said first cryptographic key according to the first backup strategy.

Advantageously, the first cryptographic key is saved separately from the first target medium **30,** so as to avoid any risk of leak of information.

The first backup strategy can be triggered automatically by the main software application **12;** for instance, the device **10** can comprise a clock, so that the software application **12** triggers the first backup strategy on a regular basis.

Alternatively or in combination with the previous features, the first backup strategy saved in the database **14** comprises a first status which represents whether the content of the first target volume is identical to the first source volume or not, the first and second backup software applications **22, 32** being designed to compare the content of the first source and target volumes and to allocate the relevant value to the first status of the first backup strategy.

In case the content of the first source volume is encrypted in the first target volume using the first cryptographic key, the first and second backup software applications **22, 32** are designed to compare the content of the first source and target volumes independently from the encryption, i.e. before the encryption of the content.

Then, the main software application **12** can be designed, based on the value of the first backup strategy interpreted by the control module **13,** to trigger the first backup strategy when the content of the first target and source volumes are not identical.

Alternatively, the user interface **54** of the administrator device **50** is designed to give the user the possibility to trigger the first backup strategy when the first and second client devices **70, 80** are connected to the first server, the first source and target media **20, 30** being connected respectively to the first and second client devices **70, 80.**

It should be understood that the triggering of the first backup strategy is independent from the devices via which the first source and target media **20, 30** are connected to the first server. In other words, for the first backup strategy to be triggered, the first source and target media **20, 30** can be connected to the first server by any device having an operating system, as long as the first and second backup software applications **22, 32** are installed on said device(s). It is thus understood that the system **100** of the present invention is designed to remotely run the first backup strategy.

It is thus understood that the managing of the first backup strategy between the first source medium **20** and the first target medium **30** comprises the steps of:
- Connecting the first source and target media **20, 30** respectively to the first and second client devices **70, 80;**
- Connecting the first and second client devices **70, 80** to the first server;
- Sending to the main software application **12** the source and target identifications of the first source and target volumes automatically detected by the first and second backup software applications **22, 32** installed respectively on the first and second client devices **70, 80;**
- Connecting the first and second client devices **70, 80** to each other;
- Writing at least part of the content of the first source volume in the first target volume, according to the first backup strategy;
- Updating, if required, the first status of the first backup strategy.

It is also understood that the connection of the first source and target media **20, 30** to the first and second client devices **70, 80** can require a manual action from the user, as represented in figure **1** where the first target medium **30** is a USB key that needs to be connected to the second client device **80,** or can be automatic, as represented in figure **1** where the first source medium **20** is a portion of an internal disk of the first client device **70.**

The administrator software application **56** installed on the administrator device **50** is designed so that the user interface **54** displays all the strategies saved in the database **14,** and in particular the status of each backup strategy, so that the user can easily ensure that the relevant data contained in the different media of his digital environment are properly saved.

Information relative to the security of the digital environment can be displayed by the user interface **54** in different ways; global representations can for instance be conceived, in which the backup status of an aggregate depends on the status of each backup strategy composing said aggregate. For instance, global representation can be conceived for an aggregate of volumes within one particular medium, for an aggregate of volumes in several media, for each medium, for an aggregate of media... The database **14** can further comprise an additional field, so as to define a specific category relative to the backup strategy, so that the user interface **54** can then display the global backup status for all the backup strategies of said particular category.

Moreover, the user interface **54** is designed to provide the user with an interface for editing the backup strategies saved in the database, and in particular to create, consult, modify and/or delete any backup strategy.

By way of example and in non-limiting manner, the administrator software application **56** is designed to propose, when the user edits a backup strategy, a list of media and/or volumes that could be used in said edited backup strategy.

By way of example and in non-limiting manner, the first and second backup software applications **22, 32** are designed to respectively identify a first and a second list of the source and target volumes of the first source and target media **20, 30,** the main software application **12** being designed to identify, within said first and second lists, the volumes that are not included yet in any of the backup strategies saved in the database **14.** Thus, the security of the digital environment can be improved, the user being aware of the volumes that are potentially at risk.

The administrator software application **56** is also designed to replace, in all the concerned backup strategies, the volume of one of the first source and target media **20, 30** by a new volume, said new volume being either on said one of the first source and target media **20, 30,** or part of a different medium.

Following the replacement of one of the first source and target media **20, 30** by a new volume, the status of the concerned backup strategies would automatically be given the value corresponding to an unsynchronized situation.

For instance, in case the volume to be replaced in all the concerned backup strategies is the first target volume of the first target medium **30,** this functionality is particularly useful to quickly and easily replace the first target medium **30** that might have been lost or destroyed, so as not to jeopardize the data involved in the concerned backup strategies.

By way of example and in non-limiting manner, the first hard disk of the first client device **70** also constitutes a first recovery medium **40** having a first recovery volume identified by a recovery identification.

The database **14** of the device **10** of the present invention further comprises a first recovery strategy from the first target medium **30** to the first recovery medium **40,** the first recovery strategy comprising the recovery identification of the first recovery volume of the first recovery medium **40,** and the target identification of the first target volume of the first target medium **30.**

The second and first client devices **80, 70** further comprise a first and a second recovery software applications **42, 52** designed respectively to read data of the first target volume and to write data in the first recovery volume.

The main software application **12** is also designed to cooperate with said first and second recovery software applications **42, 52** so as to trigger the writing of at least part of the content of the first target volume in the first recovery volume according to the first recovery strategy.

The first recovery strategy, in a consistent manner with the first backup strategy previously described, further comprises a first status which represents whether the content of the first recovery volume is identical to the content of the first target volume or not, the first and second recovery software applications **42, 52** being designed to compare the content of the first target and recovery volumes and to allocate the relevant value to the first status.

In a consistent manner with the first backup strategy, the first recovery strategy can be triggered automatically by the main software application **12,** based on the value of the first status of the first recovery strategy, or by the user via the user interface **54.**

The first recovery strategy can also comprise a second cryptographic key, the main software application **12** being designed to trigger the decryption of at least part of the content of the first target volume to be written on the first recovery volume using said second cryptographic key.

Moreover, the user interface **54** is also designed to provide the user with an interface for editing the recovery strategies saved in the database, and in particular to create, consult, modify and/or delete any recovery strategy.

As detailed above regarding the backup strategies, the administrator software application **56** installed on the administrator device **50** is also designed to replace, in all the concerned recovery strategies, the volume of one of the first target and recovery media **30, 40** by a new volume.

Similarly to the managing of the first backup strategy, it is understood that the managing of the first recovery strategy between the first target medium **30** and the first recovery medium **40** comprises the steps of:
- Connecting the first target and recovery media **30, 40** respectively to the second and first client devices **80, 70;**
- Connecting the first and second client devices **70, 80** to the first server;
- Sending to the main software application **12** the target and recovery identifications of the first target and recovery volumes automatically detected by the first and second recovery software applications **42, 52** installed respectively on the second and first client devices **80, 70;**
- Connecting the first and second client devices **70, 80** to each other;
- Writing at least part of the content of the first target volume in the first recovery volume, according to the first recovery strategy;
- Updating, if required, the first status of the first recovery strategy.

Without going beyond the ambit of the present invention, the first recovery medium **40** could obviously be distinct from the first source medium **20.**

When a new medium is connected to the main server for the first time via one of the first and second client devices **70, 80** or via the administrator device **50,** the backup, recovery or administrator software applications **22, 32, 42, 52, 56** installed on said administrator and first and second client devices **50, 70, 80** identify the volumes of said new medium, and send the list of said identified volumes to the main software application **12.**

The main software application **12** is then designed to update the list of the usable volumes that the user interface **54** displays, when the user edits one of the backup and recovery strategies.

The database **14** of the present invention further comprises an identification of the user, so that the user can access, via any device on which the administrator software application **56** is installed, the list of his backup and recovery strategies.

It is thus understood that the system **100** of the present invention comprises several software applications:
- A first and second backup software applications **22, 32,** installed respectively on the devices **70, 80** to which the first source and target media **20, 30** are connected;
- A first and second recovery software applications **42, 52** installed respectively on the devices **80, 70** to which the first target and recovery media **30, 40** are connected;
- An administrator software application **56,** designed in particular to detect all the available media, and to send the list of said available media to the first server; and
- A main software application **12,** designed to liaise with the other software applications, so as, in particular, to run the first backup and recovery strategies.

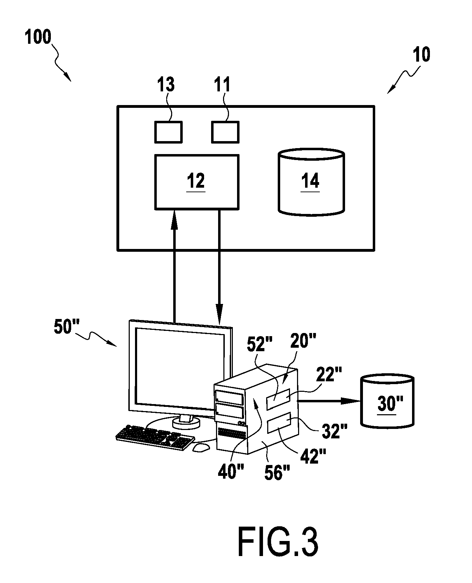

In the examples shown in figures **2** and **3****,** the system **100** of the present invention comprises a device **10** as the one described with reference to figure **1****.**

In the example shown in figure **2****,** the system **100** further comprises an administrator device **50'** on which an administrator software application **56'** is installed, and a first client device **70'.**

The first client device **70'** has a first hard disk constituting both a first source medium **20'** and a first recovery medium **40'.**

A USB key is also connected to the first client device **70',** said USB key constituting a first target medium **30'** according to the present invention.

The first client device **70'** of the system **100** of figure **2** then constitutes both the first and second client devices **70, 80** of the system of figure **1****.**

It is understood that, on the contrary of the system **100** of figure **1****,** in which the first backup software application **22** and the second recovery software application **52,** on the one side, and the first second backup software application **32** and the first recovery software application **42,** on the other side, are installed on two distinct devices, in the system of figure **2****,** the first and second backup and recovery software applications **22', 32', 42'** and **52'** are all installed on the first user device **70'.**

In the example shown in figure **3****,** the system **100** comprises a device **10** and an administrator device **50".**

The administrator device **50"** has a first hard disk, constituting both a first source medium **20"** and a first recovery medium **40".**

The administrator device **50"** is also connected to a cloud constituting a first target medium **30".**

The administrator device **50"** of the system of figure **3** then constitutes the administrator device **50** and the first and second client devices **70, 80** of the system **100** of figure **1****.**

It is thus understood that the first and second backup and recovery software applications **22", 32", 42"** and **52",** as well as the administrator software application **56"** are all installed on the administrator device **50".**

The backup and recovery strategies saved in the database **14** of the device **10** of figures **2** and **3** are managed in the same way as in the device **10** of the system **100** represented in figure **1****.**

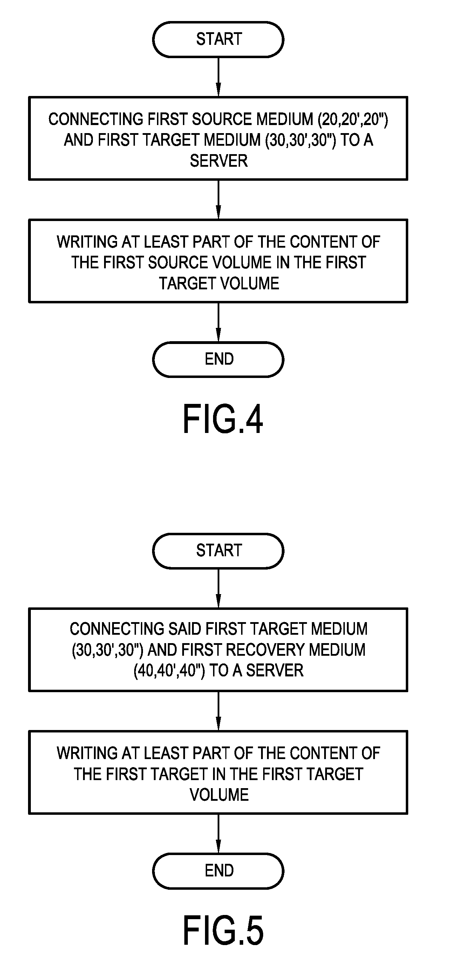

In particular, figure **4** illustrates a simplified method for managing the first backup strategy between the first source medium **20, 20', 20"** and the first target medium **30, 30', 30",** said method comprising the steps of:
- Connecting the first source and target media **20, 20', 20", 30, 30', 30"** to the first server; and
- Writing at least part of the content of the first source volume in the first target volume, according to the first backup strategy.

Figure **5** illustrates a simplified method for managing the first recovery strategy between the first target medium **30, 30', 30"** and the first recovery medium **40, 40', 40",** said method comprising the steps of:
- Connecting the first target and recovery media **30, 30', 30", 40, 40', 40"** to the first server; and
- Writing at least part of the content of the first target volume in the first recovery volume, according to the first recovery strategy.

It is understood that the system **100** of the present invention can be used for any configuration of the digital environment of the user, and can be adapted to any change in said environment.

The entire description above is given by way of example and is therefore not limiting on the invention.

For instance, the systems **100** of figures **1** to **3** are designed to run both backup and recovery strategies; systems could obviously be conceived in which only backup or recovery strategies would be implemented.

## Claims

1. A device (10) for managing backup strategies, the device comprising :
- A database (14) comprising:
o A list of media; and
o At least a first backup strategy from a first source medium (20, 20', 20") among said list to a first target medium (30, **30',** 30") among said list, said first backup strategy comprising:
▪ A source identification of a first source volume within said first source medium (20, 20', 20");
▪ A target identification of a first target volume within said first target medium (30, **30',** 30");
- A communication module (11) to access said database (14);
- A control module (12) to interpret said first backup strategy;
- A first backup software application (22, 22', 22") and a second backup software application (32, 32', 32") designed respectively to read data of the first source volume and to write data in the first target volume;
- A main software application (12) designed to cooperate with said first and second backup software applications (22, 22', 22", 32, 32', 32") so as to trigger the writing of at least part of the content of the first source volume in the first target volume according to said first backup strategy.

2. The device (10) according to claim **1,** comprising a user interface (54) designed to display and/or provide an interface for defining said first backup strategy.

3. The device (10) according to claim **1** or **2,** said first backup strategy further comprising a first status which represents whether the content of the first target volume is identical to the content of the first source volume or not, the first and second backup software applications being designed to compare the content of the first source and target volumes and to allocate the relevant value to the first status.

4. The device (10) according to claim **3,** in which the control module (13) is designed to interpret said first status, said main software application (12) being designed to trigger the writing of at least part of the content of the first source volume in the first target volume when their contents are not identical.

5. The device (10) according to any one of claims **3** or **4,** and to claim 2, in which the user interface is designed to display said first status.

6. The device (10) according to any one of claims **1 to 5,** said first backup strategy further comprising a first cryptographic key, the main software application (12) triggering the encryption of at least part of the content of the first source volume written on the first target volume using said first cryptographic key.

7. The device (10) according to any one of claims **1 to 6,** the database (14) further comprising at least a first recovery strategy from the first target medium (30, **30',** 30") to a first recovery medium (40, 40', 40") among said list,
- Said first recovery strategy comprising:
o A recovery identification of a first recovery volume within said first recovery medium;
o Said target identification of said first target volume within said first target medium;
- The device further comprising a first and a second recovery software applications (42, 42', 42", 52, 52', 52") designed respectively to read data of the first target volume and to write data in the first recovery volume;
- The main software application (12) being designed to cooperate with said first and second recovery software applications so as to trigger the writing of at least part of the content of the first target volume in the first recovery volume according to said first recovery strategy.

8. A database (14) for saving backup strategies, said database comprising:
- A list of media (20, 20', 20", 30, 30', 30"); and
- At least a first backup strategy from a first source medium (20, 20', 20") among said list to a first target medium (30, 30', 30") among said list, said first backup strategy comprising:
o A source identification of a first source volume within said first source medium;
o A target identification of a first target volume within said first target medium.

9. A system (100) for managing backup strategies, the system comprising:
- A device (10) according to any one of claim **1 to 7;**
- A first client device (70, 70', 50") having an operating system, the first backup software application (22, 22', 22") being installed on said first client device;
- A first source medium (20, 20', 20") having a first source volume;
- A second client device (80, 70', 50") having an operating system, the second backup software application (32, 32', 32") being installed on said second client device; and
- A first target medium (30, 30', 30") having a first target volume.

10. A system (100) for managing recovery strategies, the system comprising:
- A device (10) according to claim **7;**
- A first client device (70, 70', 50") having an operating system, the second recovery software application (52, 52', 52") being installed on said first client device;
- A first recovery medium (40, 40', 40") having a first recovery volume;
- A second client device (80, 70', 50") having an operating system, the first recovery software application (42, 42', 42") being installed on said second client device; and
- A first target medium (30, 30', 30") having a first target volume.

11. A method for managing at least one backup strategy between a first source medium (20, 20', 20") and a first target medium (30, 30', 30"), said method comprising the steps of:
- Connecting said first source and first target media to a server having a database (14) comprising at least a first backup strategy from said first source medium to said first target medium, said first backup strategy comprising:
o A source identification of a first source volume within said first source medium;
o A target identification of a first target volume within said first target medium;
- Writing at least part of the content of said first source volume in said first target volume.

12. A method for managing at least one recovery strategy between a first target medium (30, 30', 30") and a first recovery medium (40, 40', 40"), said method comprising the steps of:
- Connecting said first target and first recovery media to a server having a database (14) comprising at least a first recovery strategy from said first target medium to said first recovery medium, said first recovery strategy comprising:
o A recovery identification of a first recovery volume within said first recovery medium;
o A target identification of said first target volume within said first target medium;
- Writing at least part of the content of the first target volume in the first recovery volume.
